# EUROPEAN PATENT APPLICATION

(11) **EP 2 009 396 A2**
(43) Date of publication of application: **31.12.2008**
(21) Application number: 08158869.1
(22) Date of filing: 24.06.2008
(51) Int. Cl.: G01C 21/16

(54) **Low power inertial navigation processing**

(30) Priority: 26.06.2007 US 768549
(71) Applicant: Honeywell International Inc., Morristown NJ 07960 (US)
(72) Inventor: Soehren, Wayne A., Wayzata, MN 55391 (US)
(74) Representative: Buckley, Guy Julian

(57) **Abstract**

A method and system for processing inertial navigation data are disclosed. The method comprises accumulating measurement data in a data buffer from a plurality of navigational sensors, and activating a processing unit periodically to read and process the accumulated measurement data in the data buffer. The processing unit is deactivated once the accumulated measurement data is processed, such that overall power consumption of the processing unit is reduced.

## Description

### BACKGROUND

Most navigating applications with inertial navigation systems (INS) include real time processing of navigation measurements such as position, velocity, attitude, or acceleration that are updated at a high data rate (for example, up to 100 updates/second). Typically, these navigation measurements are combined with global positioning system (GPS) location coordinates using high-speed processing units. This real time navigation measurement processing often includes a Kalman filter to improve the overall navigation solution accuracy from a plurality of navigational sensors. Due to processing throughput constraints in a real time implementation with low latency (for example, an output latency less than 100 milliseconds), the Kalman filter uses a periodic "delayed reset" to apply the navigation correction to the navigation solution and sensor error terms. This delayed reset is not an optimal implementation as the resets are applied at least one Kalman period after they were valid. With the delayed reset, the high data rate is continually interrupted in order for a measurement filter to remove unwanted signal noise from the last sensor measurement and compare (that is, resets) the filtered measurement with the next sensor measurement. The delayed comparison results in higher accuracy real time navigation measurements.

Typical high-data rate navigation applications use a substantial amount of the available data throughput capabilities of the high-speed processing unit. In most situations, the high-speed processing unit continuously executes program instructions to meet various navigation application requirements. Increasingly, navigational aids that have less stringent data latency requirements (for example, personal navigation systems) are intended to operate for long periods of time with portable power sources such as a battery power pack.

For the reasons stated above and for other reasons stated below which will become apparent to those skilled in the art upon reading and understanding the present specification, there is a need for significant reductions in power consumption when performing inertial navigation processing in personal navigation systems and similar navigational aids.

### SUMMARY

The present invention relates to a method and system for processing inertial navigation data. The method comprises accumulating measurement data in a data buffer from a plurality of navigational sensors, and activating a processing unit periodically to read and process the accumulated measurement data in the data buffer. The processing unit is deactivated once the accumulated measurement data is processed, such that overall power consumption of the processing unit is reduced.

### DRAWINGS

These and other features, aspects, and advantages are better understood with regard to the following description, appended claims, and accompanying drawings where:

FIG. 1 is a block diagram of a navigation system;

FIG. 2 is a block diagram showing further details of the navigation system of FIG. 1; and

FIG. 3 is a flow diagram of a method for processing inertial navigation data.

The various described features are drawn to emphasize features relevant to the embodiments disclosed. Like reference characters denote like elements throughout the figures and text of the specification.

### DETAILED DESCRIPTION

The present invention relates to a method and system for processing inertial navigation data at low overall power consumption. The present method utilizes batch processing of navigation-aiding data, which allows a navigation processing unit to be powered down to a "sleep" mode between batch runs. Advantageously, by using this batch processing technique, the navigation processing unit is powered down at least 50% of the time, reducing overall power consumption. In addition, the batch processing described herein allows for additional data processing techniques that increase accuracy and performance for high latency navigation systems (for example, an output latency greater than 100 milliseconds) and similar navigational aids.

The present method generally comprises accumulating measurement data in a data buffer from a plurality of navigational sensors, and activating a processing unit periodically to read and process the accumulated measurement data in the data buffer. Once the accumulated measurement data is processed, the processing unit is deactivated such that overall power consumption of the processing unit is reduced, such as by a factor of at least two.

In the inertial navigation data processing discussed herein, all of the measured navigation sensor data (for example, GPS, range tracking, or altimeter data) can be time stamped and stored in a low power memory device. On an as-needed basis (alternatively, at a periodic programmed rate), the navigation processing unit is activated and the sensor data processed to generate a navigation solution. Once the solution is generated, the navigation processing unit is instructed to de-activate until needed again. For example, the navigation processing unit is instructed to end a "sleep" or other power saving mode, process the sensor data, and return to the "sleep" mode to reduce power consumption of the navigation system.

Additionally, the present method and system can operate a Kalman filter on accumulated sensor data at substantially the same time as new sensor data is collected. A delayed reset approach during real-time data acquisitions involves delaying the filtering of the sensor data on currently-acquired data. Operating the Kalman filter on accumulated data and immediately applying the reset provides more stable measurements than the delayed reset approach is capable of in real-time. Further processing techniques include corrections to previous data points by using the Kalman filter for "smoothing" of the measurement data. As the name implies, the data smoothing can correct past navigation results using navigation-aiding measurements from the present time. Moreover, the present processing technique is also an alternative for navigational data measurements with long delays (for example, terrain correlation). Accumulating the data using the batch processing discussed herein eliminates any compensation for long delays and simplifies the navigation processing in navigation systems with low power consumption requirements. Further details of the present invention are discussed hereafter with respect to the Figures.

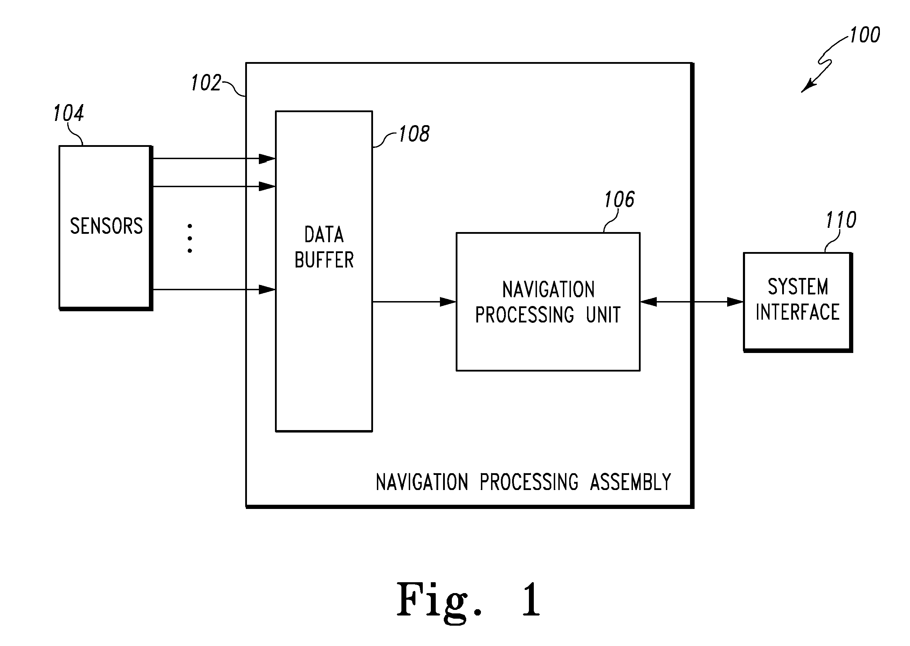

FIG. 1 is a navigation system 100. The system 100 comprises a navigation processing assembly 102 and a plurality of sensors 104 in communication with the navigation processing assembly 102. The navigation processing assembly 102 further includes a navigation processing unit 106 and a data buffer 108 in communication with the navigation processing unit 106. In one implementation, each of the sensors 104 is coupled to the data buffer 108. The navigation processing unit 106 provides processed navigational data to a system interface 110. In one implementation, the data provided to the system interface 110 includes position, velocity, and attitude measurements for at least one of an underwater navigation system, a personal navigation system, or an unmanned ground vehicle (UGV). It is understood that the navigation systems presented here are not meant to be an exhaustive listing and that any high latency navigational aid that can accept the processed navigational data from the navigation processing unit 106 can be used. In one implementation of this embodiment, the sensors 104 include one of a micro electro-mechanical system (MEMS) inertial measurement unit, a three-axis magnetometer, a barometric pressure sensor, a selective availability anti-spoofing module (SAASM) GPS receiver, a global navigation satellite system (GNSS) receiver, and the like.

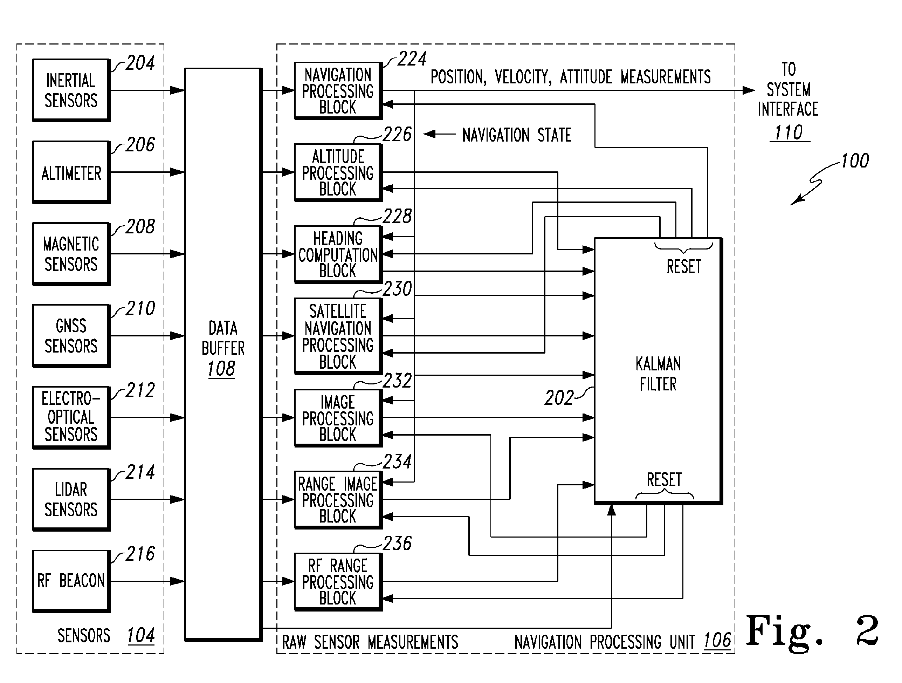

In the example embodiment of FIG. 1, the navigation processing unit 106 comprises at least one of a microprocessor, a microcontroller, a field-programmable gate array (FPGA), a field-programmable object array (FPOA), a programmable logic device (PLD), or an application-specific integrated circuit (ASIC). Moreover, the data buffer 108 is a memory unit with a first-in, first-out (FIFO) memory configuration (for example, one of a random access memory (RAM) device, an FPGA, a PLD, or an ASIC). In one implementation, the data buffer 108 is configured to hold at least 1.5 times the sensor data necessary for a desired navigation output rate of 100 Hz. At an output rate of 1 Hz, the data buffer 108 is configured to hold up to 150 to 200 sensor data measurements. As discussed in further detail below with respect to FIG. 2, the output rate for the navigation processing unit 106 is an adjustable (programmable) output rate.

In operation, the data buffer 108 accumulates navigation measurement data from the plurality of sensors 104. As further described in detail below with respect to FIG. 2, the navigation processing unit 106 periodically processes the accumulated measurement data at a first power level (active state) to compute the navigation state (for example, position, velocity, and attitude) of the system 100. The periodic processing discussed herein comprises at least one batch processing method which, in one implementation, powers down the navigation processing unit 106 at least 50% of the time to a second power level (inactive state) that is less than the first power level, such that the overall power consumption of the processing unit in the system 100 is reduced by a factor of at least two.

FIG. 2 shows further details of the navigation system 100 according to one embodiment, which includes the sensors 104, the data buffer 108, and the navigation processing unit 106 of FIG. 1. The sensors 104 can include one or more inertial sensors 204, an altimeter 206, magnetic sensors 208, GNSS sensors 210, electro-optical (EO) sensors 212, light detecting and ranging (LIDAR) sensors 214, a radio-frequency (RF) beacon 216, and various combinations thereof. In alternate embodiments, alternate navigational sensors can be implemented (for example, a range finder, an accelerometer, a gyroscope, a stereo vision sensor, or the like).

In the example embodiment of FIG. 2, the navigation processing unit 106 further comprises a Kalman filter 202 and a plurality of processing blocks 224 to 236 in communication with the Kalman filter 202. As shown in FIG. 2, each of the processing blocks 224 to 236 receive sensor measurement data from the sensors 104 through the data buffer 108. The plurality of processing blocks can include one or more of a navigation processing block 224, an altitude processing block 226, a heading computation block 228, a satellite navigation processing block 230, an image processing block 232, a range image processing block 234, an RF range processing block 236, and various combinations thereof.

In the example embodiment of FIG. 2, the system interface 110 provides (among other functions) power management, interface signal translation (for example, serial to parallel communications), and a monitoring capability for at least a portion of the processing blocks 224 to 236. As shown in FIG. 2, monitoring capabilities exist between the system interface 110 and the navigation processing block 224, the heading computation block 228, the satellite navigation processing block 230, the image processing block 232, and the range image processing block 234.

In the navigation system 100, as motion and direction are sensed by the sensors 104, samples of data are stored in the data buffer 108 at predetermined rates as further discussed below. The Kalman filter 202 generates corrective feedback (for example, at least one reset signal) to each of the processing blocks 224 to 236 as shown in FIG. 2. For example, a first reset signal is provided to the navigation processing block 224 to control navigation error growth.

In operation, the navigation processing unit 106 in the example embodiment of FIG. 2 periodically receives an activation signal (command) from the system interface 110. In an alternate embodiment, an adjustable activation rate is programmed into the navigation processing unit 106, in which a user of the system 100 can refresh (update) the adjustable activation rate. Once activated, the navigation processing unit 106 reads the measurement data from the sensors 104 accumulated in the data buffer 108. In the example embodiment of FIG. 2, the processing blocks 224 to 236 process the accumulated measurement data. In one implementation, the Kalman filter 202 reads raw accumulated measurement data directly from the data buffer 108 as shown in FIG. 2. Moreover, activation of the navigation processing unit 106 at the adjustable activation rate eliminates compensating for any prescribed measurement delays as the measurement data is received. For example, to track the accumulated data, the data buffer 108 inserts time stamps for each data message indicating the time of data accumulation.

In one implementation, the buffered measurement data from the data buffer 108 is processed in the Kalman filter 202 over a filter processing interval. The navigation processing unit 106 uses the filtered navigation data from the Kalman filter 202 to further determine a navigational state of the inertial navigation system once the accumulated measurement data is processed. In the example embodiment of FIG. 2, the navigational processing unit 106 operates the Kalman filter 202 on the accumulated measurement data while the data buffer 108 continues to collect new measurement data. From the sensor data, the Kalman filter 202 determines the navigational state of the navigation system 100

The Kalman filter 202 is a measurement filter that removes the effects of signal interference (noise) in the processing blocks 224 to 236. The Kalman filter 202 provides an estimate of the location of a target being measured with the sensors 104 at the present time (filtering) or at a time in the past (interpolation or smoothing). In the example embodiment of FIG. 2, the Kalman filter 202 receives the buffered sensor measurement data from the processing blocks 224 to 236 (for example, position, velocity, and attitude estimates). In one implementation, the post-processing performed in each of the processing blocks 224 to 236 involves applying the Kalman filter 202 to substantially reduce navigation errors. For example, the Kalman filter 202 can use a weighted average (or similar approach) to remove erroneous or redundant measurements, resulting in a higher accuracy navigation measurement. In alternate embodiments, the post-processing performed by each of the processing blocks 224 to 236 involves applying one or more navigation models based on the real-time recordings gathered by the data buffer 108.

In one implementation of FIG. 2, a distance prediction is estimated by differencing position estimates from the navigation processing block 224 at the stop and start times of the filter processing interval. The navigation processing block 224 uses the sensor data received from the inertial sensors 204 to determine the position estimates. In this implementation, the inertial sensors 204 comprise a triad of accelerometers and a triad of gyroscopes to provide orthogonal movement and direction signals in at least three dimensions to the navigation processing block 224. The navigation processing block 224 processes the signals according to known techniques to provide the position estimate, a velocity estimate, and an attitude estimate to the system interface 110, which can include both direction and heading and the distance moved in that direction.

The altimeter 206 can include at least one barometric pressure sensor for initial altitude and altitude adjustments of the navigation system 100. The altimeter 206 provides pressure sensor data to the altitude processing block 226. In one implementation, the navigation system 100 uses the pressure sensor data from the altitude processing block 226 to determine the terrain over which the user is moving. In this case, the altitude processing block 226 measures terrain elevation and the navigation system 100 can predict a terrain correlation position.

In one embodiment, the magnetic sensors 208 can include at least three magnetic sensors mounted orthogonally with respect to one another. The magnetic sensors 208 are available for initial heading and as a heading aid for the navigation system 100. For example, the magnetic sensors 208 output magnetic sensor data to the heading computation processing block 228.

In addition to the sensor measurement data from the inertial sensors 204, the altimeter 206 and the magnetic sensors 208, the navigation system 100 incorporates navigation information gathered from the GNSS sensors 210, the EO sensors 212, the LIDAR sensors 214, and the RF beacon 216 to obtain accurate geographic location and distance traveled information for the Kalman filter 202. The GNSS sensors 210 allow for information to be gathered which accurately tracks the position of the target at any given time. The tracking information from the GNSS sensors 210 provides an additional set of values for the distance traveled and position of the target (where the other values for the position and distance traveled were derived from the navigation processing block 224). In one embodiment, the EO sensors 212 provide images of the target to the image processing block 232. Similarly, the LIDAR sensors 214 can be flash LIDAR sensors that provide range images between the system 100 and the target to the range image processing block 234. In a similar implementation, the RF beacon 216 provides time difference of arrival (TDOA) or time of arrival (TOA) measurements, between the system 100 and the target, to the RF range processing block 236. Once the accumulated measurement data in each of the processing blocks 224 to 236 and the navigation state is processed by the Kalman filter 202, the navigational processing unit 106 acknowledges a deactivation signal and enters a non-active state, thereby reducing overall power consumption in the navigation system 100 by a factor of at least two.

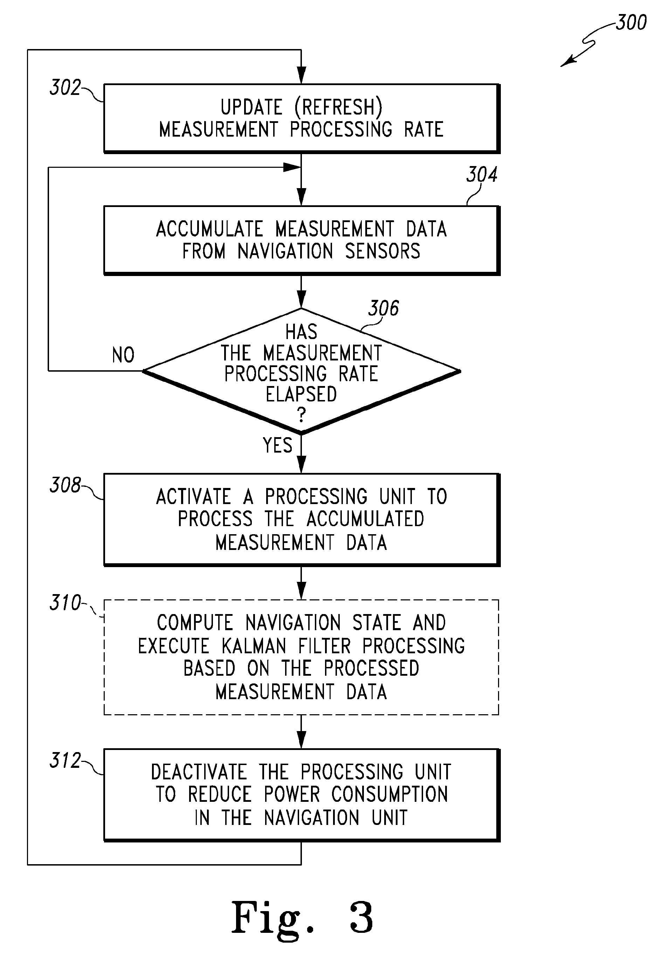

FIG. 3 is a flow diagram of a method 300 for processing inertial navigation data using the system shown in FIGS. 1 and 2. An adjustable measurement processing rate is updated (refreshed) (block 302), and measurement data is accumulated from navigational sensors (block 304) in a data buffer. If the adjustable measurement processing rate has not elapsed (block 306), the method returns to block 304. In at least one implementation, the measurement processing rate is configured at a constant rate, and the method continues at block 304. If the measurement processing rate has elapsed (block 306), the processing unit is activated to process the accumulated measurement data (block 308). In one implementation, the data buffer tracks and records the accumulated data with time stamps inserted with the recorded data at the time of accumulation. The processing unit retrieves the measurement data as commanded from a navigation system interface to eliminate compensating for prescribed measurement delays. In an optional step, movements of the navigation unit are computed based on the processed measurement data (block 310), such as by operating a Kalman filter on the accumulated measurement data at substantially the same time as new measurement data is collected. The processing unit is then deactivated to reduce power consumption in the navigation unit (block 312). The method then loops back to block 302 to await another activation sequence.

While the embodiments discussed here have been described in the context of an inertial navigation system, apparatus embodying these techniques are capable of being distributed in the form of a machine-readable medium of instructions and a variety of program products that apply equally regardless of the particular type of signal bearing media actually used to carry out the distribution. Examples of machine-readable media include recordable-type media, such as a portable memory device; a hard disk drive (HDD); a random-access memory (RAM); a read-only memory (ROM); transmission-type media, such as digital and analog communications links; and wired or wireless communications links using transmission forms, such as (for example) radio frequency and light wave transmissions. The variety of program products may take the form of coded formats that are decoded for actual use in a particular inertial navigation system by a combination of digital electronic circuitry or software residing in a programmable processor (for example, a special-purpose processor or a general-purpose processor in a computer).

At least one embodiment discussed here can be implemented by computer-executable instructions, such as program product modules, which are executed by the programmable processor. Generally, the program product modules include routines, programs, objects, data components, data structures, and algorithms that perform particular tasks or implement particular abstract data types. The computer-executable instructions, the associated data structures, and the program product modules represent examples of executing each of the embodiments disclosed herein.

This description has been presented for purposes of illustration, and is not intended to be exhaustive or limited to the embodiments disclosed. The embodiments disclosed are intended to cover any modifications, adaptations, or variations which fall within the scope of the following claims.

## Claims

1. An inertial navigation system (100), comprising:
a navigation processing assembly (102) comprising:
a data buffer (108); and
a navigation processing unit (106) in communication with the data buffer;
a plurality of navigational sensors (104) in communication with the data buffer; and
a system interface (110) in communication with the navigation processing unit;
wherein the plurality of sensors take data measurements that are accumulated in the data buffer to predict movements of the inertial navigation system;
wherein the navigation processing unit is activated periodically to read and process the accumulated data measurements in the data buffer; and
wherein the navigation processing unit is deactivated once the accumulated data measurements are processed, such that overall power consumption of the navigation processing unit is reduced by a factor of at least two.

2. The system of claim 1, wherein the navigation processing unit comprises:
a Kalman filter (202) ; and
a plurality of processing blocks (224, ... , 236) in communication with the Kalman filter, each of the processing blocks corresponding to at least one of the sensors.

3. The system of claim 2, wherein the Kalman filter receives raw accumulated sensor measurements directly from the data buffer.

4. The system of claim 2, wherein the Kalman filter estimates present and previous locations of a target being measured with the plurality of navigational sensors.

5. The system of claim 2, wherein the plurality of processing blocks comprise a navigation processing block (224) , an altitude processing block (226) , a heading computation block (228), a satellite navigation block (230), an image processing block (232), a range image processing block (234), a radio-frequency range processing block (236), or combinations thereof.

6. The system of claim 1, wherein the navigation processing unit provides the processed measurement data to the system interface that is coupled to a high latency navigational aid.

7. The system of claim 1, wherein the plurality of sensors comprise an inertial sensor (204), an altimeter (206), a magnetic sensor (208), a global navigation satellite system sensor (110), an electro-optical sensor (212), a light detecting and ranging sensor (214), a radio-frequency beacon (216), or combinations thereof.

8. The system of claim 1, wherein the navigation processing unit comprises a microprocessor, a microcontroller, a field-programmable gate array, a field-programmable object array, a programmable logic device, or an application-specific integrated circuit.

9. The system of claim 1, wherein the data buffer is a memory unit with a first-in, first-out memory configuration.

10. The system of claim 9, wherein the data buffer is one of a random access memory device, a field-programmable gate array, a programmable logic device, or an application-specific integrated circuit.
